# EUROPEAN PATENT APPLICATION

(11) **EP 0 937 900 A2**
(43) Date of publication of application: **25.08.1999**
(21) Application number: 99300637.8
(22) Date of filing: 28.01.1999
(51) Int. Cl.: F16C 33/10, F16C 33/20

(54) **Fluid lubricated bearing**

(30) Priority: 29.01.1998 GB 9801802
(71) Applicant: Silvertown U.K. Limited, Burton-on-Trent, Staffordshire DE13 0SN (GB)
(72) Inventor: Neave, John, Tutbury, Staffordshire DE13 9JD (GB)
(74) Representative: Lawrence, John

(57) **Abstract**

A fluid lubricated type bearing (10) comprises a support member (11) and a bearing liner (12) of thermoplastics material. The support member (11) also may be of thermoplastics material and may be co-extruded with the bearing liner (12). Flutes (17) may be formed at a bearing surface (16) of the bearing liner (12) and may be aligned with flutes (15) formed at an interface surface (14) of the support member (11) during extrusion.

## Description

This invention relates to a fluid lubricatable bearing, known as a fluid lubricated bearing, of the kind comprising a bearing sleeve for supporting or guiding a rotatable member or an oscillatable member. It relates in particular, but not exclusively, to a bearing of the kind lubricated by water.

The invention relates also to an improved method for the manufacture of a fluid lubricated bearing.

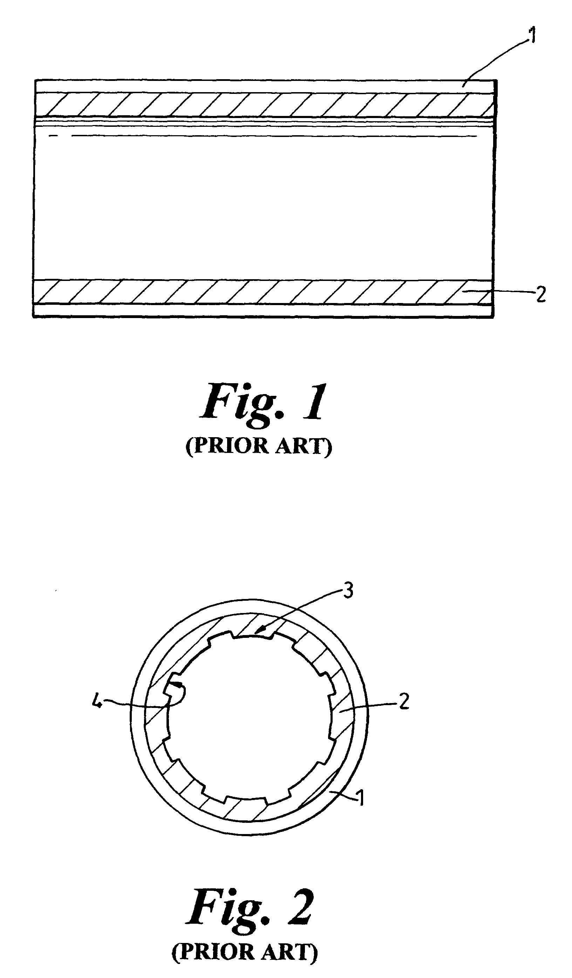

The construction of a conventional water lubricated bearing is shown in the accompanying Figure 1 which is a longitudinal section view and the accompanying Figure 2 which is an end view.

The bearing has an outer cylindrical shell 1 of a metal, usually brass but sometimes stainless steel, or of a phenolic/paper material, e.g. Tufnol.

The shell 1 has a bearing liner 2. Usually the liner is a sleeve of a nitrile rubber compound bonded to the shell 1 using chemical bonding agents as part of the temperature cross-linking process of the rubber, or it is a sleeve of castable polyurethane.

The bearing liner often has a fluted bearing face which comprises longitudinally extending lands 3 and flutes 4. The lands 3 contact the movable member which is supported or guided by the bearing, and the flutes 4 ensure that fluid can flow to and lubricate the bearing interface.

The bearing liner 2 may be formed from rubber by injection, transfer or compression moulding or by intrusion into or around a bearing shell. A central mandrel, or outer mould, may be used to create the shape of the lands 3 and flutes 4 at the bearing surface of an inwardly or an outwardly disposed bearing liner.

Subsequent to cure of the rubber, for a bearing in which the liner lies within the tubular outer shell, the bore of the bearing liner is ground to a close tolerance (e.g. +0.1 to +0.2 on 100mm), that degree of close tolerance and concentricity of bore and outer shell not being possible by conventional rubber moulding techniques alone.

The outer shell is then turned and ground so as to result in either a close clearance or interference fit when installed in a housing.

The material for the shell is usually selected to be compatible with the environment, and not to create a corrosive cell type action in which the fluid lubricant acts as an electrolyte.

The shell is, or may be required to be, machinable, and preferably does not swell by more than 1% when exposed to the bearing fluid. Usually also the shell material must be suitable for bonding to rubber of a bearing liner and be sufficiently rigid to provide shape stability and allow installation by interference fit into a housing.

The choice of material for the bearing liner is more complex. The bearing liner must not be too rigid, otherwise it will cause rapid wear of the material of a supported shaft (a typical disadvantage of composite or all-resin water lubricated bearings) and will transmit noise and vibrations from the shaft to the bearing housing. A softer bearing liner will cause less shaft wear, but more wear will occur at the liner, where soft materials can display a poor tear strength.

In seeking an optimum liner material formulation a compromise often must be made; the material needs to have acceptable processability using available equipment, whilst the presence of processing aids, such as plasticisers, will reduce the strength of the bearing liner and not help durability.

Other requirements of the bearing liner are stability when exposed to the bearing fluid, and a low final fluid absorption. These requirements can be a problem with some polyurethane materials. Also, a deeply fluted shape often is preferred if it is required to allow flushing of any abrasive particles in the fluid.

A problem which arises with conventional fluid lubricated bearings having a bearing liner of rubber (or polyurethane) is that the flexibility of that material, which provides good wear properties and acceptable noise and vibration attenuation, can allow an unacceptably high shaft deflection. This problem often is a limiting factor on design considerations, and can result in tubular type bearings needing to have a length to bore ratio typically of 4:1.

The present invention seeks to provide an improved fluid lubricated bearing and method of manufacture of a fluid lubricated bearing in which at least some of the aforedescribed disadvantages are mitigated or overcome.

In accordance with one aspect of the present invention a fluid lubricated bearing comprises a support member and a bearing liner which is supported by the support member and defines a bearing surface for contact, in use, by a movable member, wherein the bearing liner is a liner of thermoplastics material.

The bearing liner preferably is adhered to or formed integrally with the support member, for example by the use of adhesives and/or by co-extrusion or tandem extrusion.

Advantageously, the liner is an elastomeric thermoplastic material, preferably having a hardness of at least 70 Shore A (e.g. 80 plus or minus 10 Shore A) and the support member is preferably a substantially rigid material, for example a rigid thermoplastics material.

Preferably, the bearing surface is fluted with land and flute regions and the support member may also be fluted at the interface with the bearing liner with the flutes of the support member aligned with flutes of the bearing liner. A fluted bearing liner may be of substantially the same thickness at both the land and flute regions thereof. The bearing liner flutes may be rectilinear or curved.

Preferably, the bearing is a tubular type and may comprise a cylindrical bearing liner or it may be of another shape such as part-spherical or frusto-conical - e.g. a pair of part semi-spherical or frusto-conical portions arranged in a configuration to provide axial as well as radial support and guidance for a rotatable member.

In a tubular type bearing in which the bearing surface defines a plurality of flutes, the flutes may be rectilinear and extend parallel to the longitudinal axis of the bearing, or they may lie curved about said axis. The bearing liner may comprise a cylindrical bearing surface which defines a plurality of spiral flutes, and the support member may also comprise a correspondingly fluted profile at the interface with the bearing liner.

In an alternative constructions, the bearing liner may comprise a plurality of discrete sections defining lands which are preferably spaced apart to define flutes.

The flutes in the bearing surface may be arranged in a regular pattern around the inside of the bearing. Alternatively, the flutes may be arranged in an irregular pattern to improve wear or increase hydrodynamic lift at low shaft rotational speed. For example, a flute may not be required at the lowest position (in installation) or more flutes may be required in the bottom half rather than the top half of the bearing. In these cases where irregular patterns of flutes are designed, there will be only one position of fitting the bearing.

In another of its aspects the present invention provides a method for the manufacture of a fluid lubricated type of bearing comprising forming an assembly of a support member and a bearing liner supported by the support member, wherein the bearing liner is formed by extrusion of thermoplastics material.

Preferably, the bearing liner is an elastomeric thermoplastic material and the method may comprise additionally the use of a substantially rigid thermoplastics material for the support member.

The invention further teaches that the support member and bearing liner may be formed by co-extrusion or tandem extrusion whereby the support member and bearing liner may become united with one another as a consequence of the extrusion process. Alternatively the support member and bearing liner may be pre-formed and then united, for example by use of an adhesive.

The extrusion process may be employed to form a long length liner, or an assembly of support member and liner, which is then cut to required length(s). A vacuum may be employed on the outside of the extrudate to pull the hot plastic against a sizing die to provide accurate dimensional control.

The extrusion process may be used to form the liner with a fluted bearing surface. The extrusion process may also be used to provide the support member with a fluted surface at the interface with the bearing liner. The bearing liner and support member may be formed with aligned flutes during a process of co-extrusion or tandem extrusion of the bearing liner and support member.

The extrusion process may comprise use of a die to create a tubular type bearing liner, or an assembly of a bearing liner and sleeve. The die may be shaped to create flutes in the bearing surface of the liner, and may be rotated during extrusion thereby to form non-rectilinear, e.g. spiral flutes. Similarly, the interface surface of the support member may be formed with flutes, which may be rectilinear or of a curved, e.g. spiral, shape, during extrusion of material to form the support member. The extrusion process may provide a bearing liner of a fluted type which is of substantially uniform thickness at land and flute regions.

It is also taught that a tubular type bearing of the present invention, having a thermoplastic bearing liner, has secured thereto a flanged portion. The flanged portion and tubular bearing may be joined for example by fusion welding or by use of an adhesive. The flanged portion may be formed by moulding or stamping from a sheet of thermoplastics material.

In contrast to prior art constructions of flanged bearings which are either machined from thick walled tube or machined from castings, the use of a thermoplastics material in accordance with the present invention offers the opportunity for considerable savings in cost and time of manufacture.

The invention provides also a series of bearings of different types wherein differently coloured thermoplastics materials are used for the different types. The differences indicated by the colouring may, for example, be differences of load capacity, type of low friction surface, length or bore diameter.

The thermoplastic material of the bearing liner may be a type which has a low coefficient of friction (e.g. less than 0.3) and a low "break-out" torque, i.e. the torque necessary to initially move the shaft in the bearing from rest. This low coefficient of friction may arise from selection of the thermoplastic material per se or from the use of additives such as molybdenum disulphide, graphite or a polytetrafluoroethyline such as "Alpha flex" from Aston Polymer Developments Ltd. Other suitable liner materials are polyurethane and Hytrel available from Du Pont.

Embodiments of the bearing of the present invention are now described by way of example only with reference to Figures 3 to 10 of the accompanying drawings, wherein:
**Figure 3** is an end view of a first bearing embodying the invention;
**Figure 4** is an enlarged detail of part of the bearing depicted in Figure 3;
**Figure 5** is an enlarged detail of part of a second bearing embodying the invention;
**Figure 6** is an enlarged detail of part of a third bearing embodying the invention;
**Figure 7** is an enlarged detail of part of a fourth bearing embodying the invention;
**Figure 8** is an enlarged detail of part of a fifth bearing embodying the invention;
**Figure 9** is a longitudinal section of a sixth bearing embodying the invention; and
**Figure 10** is a longitudinal section of a seventh bearing embodying the invention.

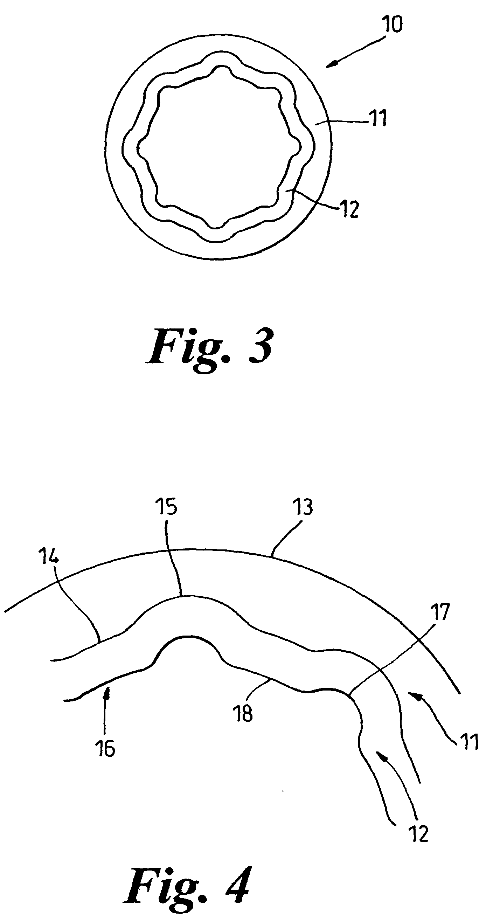

Figures 3 to 10 of the accompanying drawings depict various embodiments of bearings 10 suitable for use as water lubricated bearings for a rotatable shaft (not shown). A general description of the bearings 10 will be given first followed by a description of specific features of each embodiment. For convenience, like reference numerals are used to indicate corresponding parts of each embodiment.

The bearings 10 generally comprises an outer cylindrical shell 11 of a substantially rigid thermoplastics material such as CRASTIN PBT from Du Pont and a bearing liner 12 of a thermoplastic elastomer such as HYTREL from Du Pont of hardness 35 Shore D (approximately 70 Shore A).

The shell 11 and liner 12 are formed by extrusion, preferably by co-extrusion or tandem extrusion in which the liner 12 is formed integrally with the shell 11. Alternatively, the extrusions may be formed separately and the liner 12 bonded to the shell 11 by the use of adhesives.

Manufacture of the bearing 10 by extrusion in contrast to conventional moulding techniques is less costly as well as allowing improved dimensional accuracy to be achieved.

Referring now to the bearing 10 shown in Figures 3 and 4, the shell 11 has a smooth cylindrical outer surface 13 and an inner surface 14 provided with longitudinally extending flutes 15. The inner surface 14 is an interface surface which supports the liner 12.

The liner 12 is of uniform thickness having an inner bearing surface 16 which reproduces the inner surface 14 of the shell 11 with longitudinally extending flutes 17 aligned with the flutes 15 to serve as lubrication flutes. The flutes 17 are separated by longitudinally extending lands 18 giving the bearing surface 17 a castellated shape in cross-section.

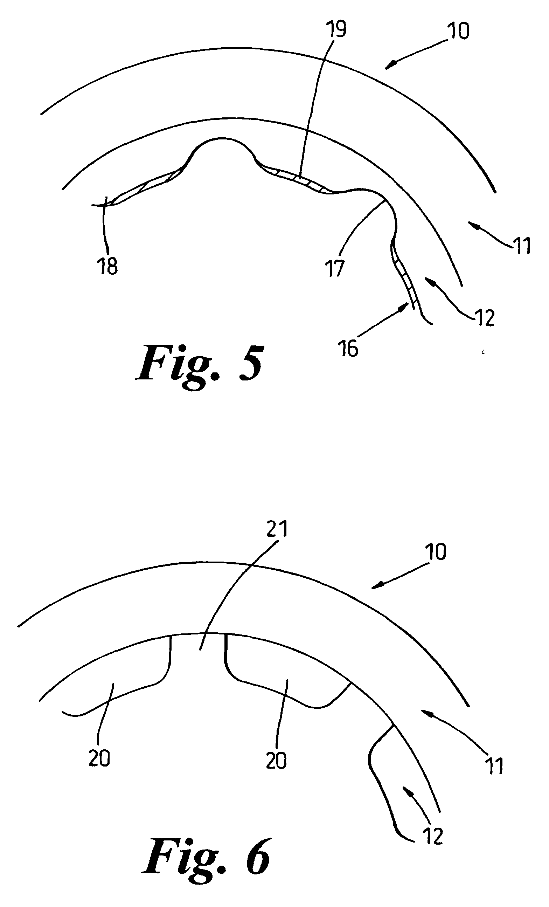

Turning now to Figure 5, the friction values of the bearing surface 16 are lowered by applying a layer 19 of another thermoplastic elastomer to the lands 18, preferably by co-extrusion or tandem extrusion. Alternatively, the liner 12 can incorporate additives to lower the friction values.

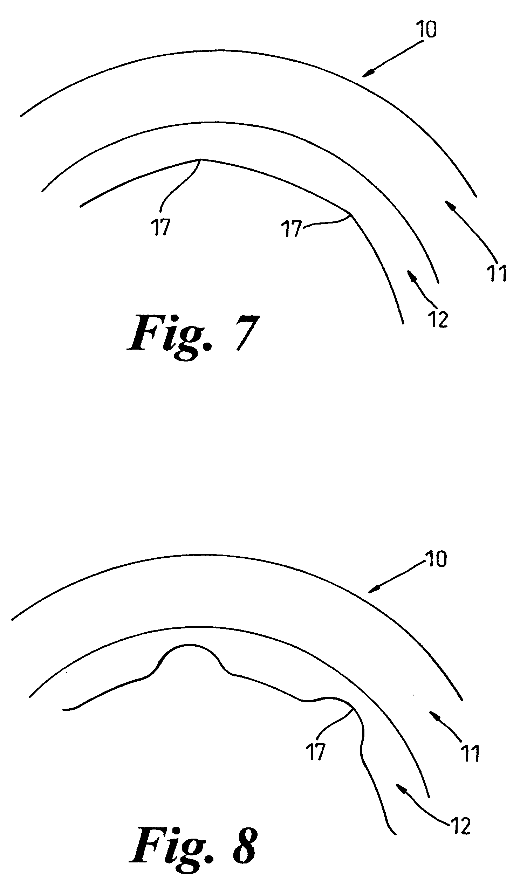

Referring to Figure 6, the liner 12 is shown formed in a plurality of discrete land regions 20 with gaps 21 between the land regions 20 serving as lubrication flutes.

As shown in Figure 7, the liner 12 has an inner bearing surface 16 of polygonal shape in cross-section with corner regions 17 serving as shallow lubrication flutes.

With reference to Figure 8, the shell 11 has a smooth cylindrical inner surface and the liner 12 is of reduced thickness in the region of the flutes 17 which serve as deep lubrication flutes.

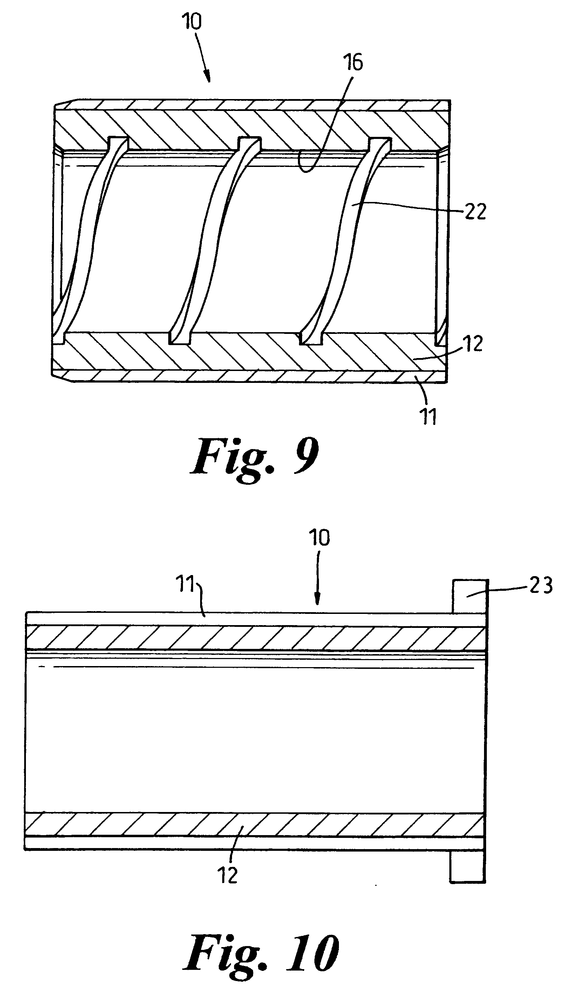

As shown in Figure 9, the liner 12 is formed with a spiral groove 22 which serves as a lubrication flute in the inner bearing surface 16. More than one spiral groove may be provided.

Turning now to Figure 10, the bearing 10 is shown with an external annular flange 23 at one end of the shell 11. The flange 23 is moulded or stamped from sheet material, preferably the same material as the shell 11, and is attached to the shell 11, for example by fusion welding or by adhesive. The flange 23 can be drilled for use with securing bolts (not shown) to mount the bearing.

The use of co-extrusion or tandem extrusion techniques (per se known to those skilled in the art) as herein described for the manufacture of a multi-layer bearing enables a bearing of that type to be formed as desired with bearing surfaces of different shape. It therefore provides a significant advance in the art of bearing manufacture because the techniques currently used do not enable such shapes to be produced.

The fluted bearing surface shown in Figures 3 to 8 results in an improved load carrying capacity. This can permit a reduction of the typical 4:1 bore to outside diameter ratio of the conventional bearing mentioned above to, say, 3:1. These benefits can be enhanced further if the bearing surface is formed with spiral type flutes. This is because the shaft passing through the bearing will have greater contact support over its length. Oscillatory movement of rotating shafts at low speed is also reduced by the presence of spiral type flutes.

The bearings shown in Figures 3 to 10 have the thermoplastic bearing liner positioned inside the support member but it will be understood that the liner could be positioned on the outside of the support member. Other alternatives or variations of the bearings shown in Figures 3 to 10 are contemplated and within the scope of the invention. Thus, bearings with thermoplastic bearing liner may include any of the features of the bearings shown in Figures 3 to 10 either separately or in combination.

## Claims

1. A method for the manufacture of a fluid lubricated type bearing (10) comprising forming an assembly of a support member (11) and a bearing liner (12) supported by the support member (10) characterised in that the bearing liner (12) is formed by extrusion of thermoplastic material, preferably thermoplastic elastomer.

2. Method according to claim 1, characterised in that the support member (11) is formed by extrusion, preferably of substantially rigid thermoplastic material, and the bearing liner (12) is optionally formed by co-extrusion or tandem extrusion with the support member (11).

3. Method according to claim 1 or claim 2, characterised in that, during the operation of extruding the liner (12), a bearing surface (16) defined by the extruded bearing liner (12) is provided with flutes (17;21;22), for example rectilinear flutes (17;21) or spiral flutes (22) arranged in a regular or irregular pattern.

4. Method according to claim 3, characterised in that an interface surface (14) of the support member (11) is formed with flutes (15) aligned with the flutes (17) in the bearing liner (12), and the bearing liner (12) is preferably of substantially uniform thickness.

5. Method according to any one of the preceding claims, characterised in that the extrusion process provides a long length bearing liner (12) or assembly comprising the bearing liner (12) and support member (11) which is then cut to the required length for an individual bearing (10).

6. A fluid lubricated bearing (10) comprising a support member (11) and a bearing liner (12) which is supported by the support member (11) and defines a bearing surface (16) for contact, in use, by a movable member, characterised in that said bearing liner (12) is made of thermoplastic material, preferably by extrusion of thermoplastic elastomer.

7. A bearing according to claim 6, characterised in that the liner (12) is integral with the support member (11), for example by co-extrusion or tandem extrusion of the liner (12) with the support member (11).

8. A bearing according to claim 6 or claim 7, characterised in that the bearing liner (12) comprises a thermoplastic elastomer having a hardness of at least 70 Shore A and the support member (11) preferably comprises a substantially rigid thermoplastics material.

9. A bearing according to any one of claims 7 to 9, characterised in that the bearing surface (16) is grooved (17;21;22), for example by rectilinear (17;21) or spiral (22) flutes arranged in a regular or irregular pattern.

10. A bearing according to claim 9, characterised in that the bearing surface flutes (17) are aligned with flutes (15) in an interface surface (14) of the support member (11), and the bearing liner (12) is preferably of substantially uniform thickness.

11. A bearing according to any one of claims 6 to 10, characterised in that the liner (12) and support member (11) are tubular, and the support member (11) preferably has an external annular flange (23) at one end.

12. A series of different types of bearings (10) each according to any one of claims 6 to 11, characterised in that differently coloured thermoplastics materials are used for the different types.
